# EUROPEAN PATENT APPLICATION

(11) **EP 1 705 156 A1**
(43) Date of publication of application: **27.09.2006**
(21) Application number: 06003172.1
(22) Date of filing: 16.02.2006
(51) Int. Cl.: C02F 1/52, C02F 1/56

(54) **Process and substances for the treatment of wastewater, particularly laundry machine wastewater.**

(30) Priority: 22.03.2005 IT MI20050473
(71) Applicant: Bruned, Daniele, 00122 Ostia Lido RM (IT); Bruned, Massimiliano, 00122 Ostia Lido RM (IT); Sellan, Franco, 00119 Roma (IT)
(72) Inventor: Bruned, Daniele, 00122 Ostia Lido RM (IT); Bruned, Massimiliano, 00122 Ostia Lido RM (IT); Sellan, Franco, 00119 Roma (IT)
(74) Representative: Petruzziello, Aldo

(57) **Abstract**

The invention relates to substances with synergic effect for the treatment of wastewater, particularly wastewater from washing machines, said substances including inerts and flocculants, said inerts containing silicates, silico-aluminates and cellulose fibers, either alone or blended.

In comparison to conventional washing wastewater management, as in the case of household or heavy-duty washing machines, the substances of the invention exhibit the great advantage of significantly reducing water consumption and that of recovering the unused detergent, which is not discharged into the environment, but it is used again in the next washing cycles.

## Description

The present invention relates to substances exhibiting a synergic effect for the treatment of wastewater, more specifically washing machine wastewater. The invention further applies to the wastewater treatment process, and also to the full water recycle washing apparatus based on the same treatment process.

The field of the invention is the treatment of wastewater, specifically wastewater from both commercial grade washing machines, with separate washing and rinsing cycles, and heavy-duty tunnel washers.

The soil which may be washed away by means of the above processes includes several types of substances: nitrogen compounds, perspiration, proteins, albuminoids from the skin and from ironing finish, as well as starch substances and amylaceous compounds from products used in ironing.

Soil is typically composed as follows:
- heavy metals, dusts (sand, calcium carbonate, etc.), mud, mineral pigments,
- fat substances, asphalt,
- hairs,
- cotton, paper fibers,
- carbon black,
- miscellaneous organic compounds, organic pigments, nitrogen and ammonia compounds, perspiration, protein, albuminoids, starch substances and polysaccharides.

The high surfactant content, together with the high organic and inorganic load, makes treatment of this type of wastewater particularly difficult, also due to the presence of surfactants, in order to discharge wastewater in compliance to the regulations in force. Indeed the wastewater management is also influenced by polluting substances produced by heavy-duty washing apparatus, wherein surfactants interfere towards the whole water purification process.

Conventional treatment processes can vary considerably, depending on pollutants involved, wastewater mass and disposable space for installing a proper filtering device. Wastewater may be treated with biological and/or chemical-physical solutions. In some cases, further treatment stages may be needed (adsorption, etc.) The investment effort needed to implement such wastewater management systems is very substantial, not to mention that some systems are extremely bulky, and show no flexibility at all in terms of inlet parameters. What is more, none of the conventional solutions mentioned above guarantees compliance to regulation currently in force. Maintenance of these systems implies a considerable amount of time and resources, due to the size and variety of systems, as well as to the chemicals used (corrosion, vapours, etc.). Consequently, management cost is also very significant (working hours, various chemicals, mud treatment and waste, system unusable during routine maintenance).

The main object of the present invention consists in the preparation of new synergic substances which may be added to wastewater, more specifically washing machine wastewater, so as to eliminate the soil and re-use the clean water, still warm and with the unused residual detergent from the previous washing cycle.

A further object of the invention is to provide the process for recovering the said wastewater, in order they are re-used instead of being discharged in the environment.

Another object of the invention is that of providing the apparatus for treating and recycling the above-mentioned wastewater, specifically with regard to washing machines or tunnel washers.

The above objects are reached by means of the synergic substances, the process and the apparatus of claims 1, 13 and 20 respectively. Some preferred embodiments of the invention are claimed in the remaining claims.

In comparison to conventional washing wastewater management, as in the case of household or heavy-duty washing machines, the process and the apparatus of the invention exhibit the great advantage of significantly reducing water consumption. At the same time the invention solves the problem of the pollution of the environment caused by the detergent because, in the process of the invention, the amount of the unused detergent is not discharged into the environment, but it is recovered to be used again in the next washing cycles.

The above results are obtained thanks to the synergic substances of the invention, which form large and heavy flocs within the water to be treated, wherein soil and the detergent having reacted with soil are trapped, so that they can be separated from the hot water containing the unused detergent. The synergic substances of the invention are not soluble, therefore they do not modify the chemistry of the water-detergent solution, and may be easily filtered out of the solution.

The process and the apparatus of the invention have also the advantage of lowering the detergent consumption, but it also saves considerable power, as the fast wastewater management (from a few seconds to a few minutes) makes it possible to recover the purified hot water, having the same temperature of water at the start of the treating cycle.

Furthermore the process and the apparatus of the invention allow for an even higher efficiency in the washing cycle, because after the recycle treatment, the detergent substances contained in the water are more effectively blended than in the previous cycle. Indeed, owing to the fact that the water recycle does not increase the water calcium amount, the recirculated water-detergent solution becomes softer, and therefore the water-detergent solution is more efficiently blended.

Last but not least, the water treatment apparatus of the invention is extremely small in size, and it may be installed directly within any washing appliance, or connected as an external kit to existing washing machines.

The above and further objects, features and advantages are shown in the following description of preferred embodiments of the process and the apparatus of the invention illustrated, by way of example only, in the appended drawings. In these drawings:
- figure 1 shows the apparatus of the invention as applied to a heavy-duty tunnel washer;
- figure 2 shows a different embodiment of the apparatus of figure 1.

Although in the following examples reference is always made to wastewater from washing machines, it must be noted that the invention is not limited to such applications, but it can be used for any kind of wastewater (e.g. industrial wastewater), with or without a surfactant content.

The synergic substances used in the process of the invention are essentially composed of inerts, such as silicates, silico-aluminates and cellulose fibers, either alone or blended, with flocculants and possibly coagulants.

Silico-aluminate compounds, as well as cellulose or common clay, may be obtained as thin powders to make slurry solutions used to disrupt the soil colloidal bonds, through chemical and physical adsorption, ionic replacement, coagulation and uneven charge pattern.

Flocculants, on the other hand, work both to disrupt the soil colloidal bonds, by acting on the charges opposed to those of the colloidal solution in the soil, and to promote co-flocculation of silico-aluminates, etc. added to such suspension.

Silico-aluminate and cellulose inerts are mixed into the water to be treated, for as long as needed in order for the soil particles to become embedded. Flocculants are then added, still by mild stirring, until flocs begin to form.

Preferred silicates and silico-aluminates for use in the invention are:
- perlite and expanded perlite,
- diatomite,
- activated kaolin,
- kaolinite,
- vermiculite (or chlorite),
- all sorts of talc,
- clinoptilolite,
- clays,
- Portland cement,
- smectites.

Due to the fact that they are present in clay minerals, silicates and silico-aluminates, said substances show layered weave patterns, well adapted for trapping soil particles bound by the detergent. Indeed, gaps between the various layers are filled in by water molecules or by cations, both of which may be easily replaced. Their replacement with organic solvents such as glycerin, ethylenic glycol or other organic compounds determine in some cases a variation in distance between layers. This phenomenon shows how clays can perfectly react with soil particles in wastewater.

Among the synergic silicates and silico-aluminates of the invention (either singularly or conveniently blended together), the following are preferred:
- **Perlite and expanded perlite:** volcanic mineral containing 2-5% combination water; it may be defined as hydrate aluminum silicate. Its properties include expansion up to 20 times the original size, remarkable chemical purity, lightness and porosity. Its chemical composition is: (SiO₂ 73.5%; Al₂O₃ 21.5%; Fe₂O₃ 0.56%; CaO 0.23%; MgO 0.07%; Na₂O+K₂O= 4.00%; TiO₂ 0,05%; pH is around 7).
- **Diatomite:** it consists of siliceous substances from shells of diatoms and radiolaria. Such siliceous shells have a variety of shapes, it features high capillary density, chemical inertia, rigidity and porosity, very low density and a high absorbing capacity thanks its porosity ratio reaching 90%. Its chemical composition is: (SiO₂ 89.0%; Al₂O₃ 3.5%; Fe₂O₃ 1.45%; CaO 0.5 %; MgO 0.07%; Na₂O+K₂O= 4.5%; TiO₂ 0.04%; pH is about 8).
- **Activated Kaolin and Kaolinite:** great ion-absorbing hydrate aluminum silicate. Its chemical composition is: Al₄[(OH)₈ Si₄O₁₀]. It has remarkable adsorbing properties.
- **Vermiculite** (or chlorite): it is a clay-like phyllosilicate mineral with an expandable structure. Vermiculite's crystal structure consists of several trioctahedron-shaped mica clusters separated by a double layer of water molecules. The structure is not balanced, as silicon in tetrahedrons is replaced by aluminum. The lack in charge is balanced by replaceable cations. The vermiculite's expansion is limited to two layers of water molecules. Vermiculite features a rather varied chemical composition, and it can split into particles of considerable size. It shows a remarkable cation exchange capacity (150 meq. per 100 g). Moreover, vermiculites may adsorb several organic molecules between the mica layers. Its chemical composition is: complex silicate, made of aluminum, iron and magnesium.
- **Smectites:** their action is similar to that of vermiculites (chlorites).
- **Talc** (all sorts): it can adsorb several substances. Its structure allows for the introduction of foreign molecules, particularly (non-polar) oils and fats. One of its chemical compositions is: Mg₃[(OH)₂ | Si₄O₁₀].
- **Clinoptilolite:** it belongs to a group of minerals essentially composed of hydrate aluminum silicates of one or more alkaline or alkaline-earth metals (sodium, potassium, calcium). Thanks to its microporous structure, it may be easily replaced with other cations, and it also has adsorbing properties. Its chemical characteristics and applications are essentially comparable to those of active carbons and cationic resins: selective absorption of heavy metals in water solution Ba, Cd, Pb, Cu, Zn, Ni, Cr, etc., removal of ammonia from water, clear flocculation of primary waters, softening of hard waters. The clinoptilolite's specific chemical structure and high specific surface account for excellent activity and efficiency. Its high exchange capabilities with ammonium ion NH4+ makes it perfectly suitable for the elimination of ammonia residue in wastewater.
- **Clays and common clay material**
- **Portland cement:** it may be included in the group of silico-aluminate compounds. It has disruptive (coagulant) and adsorbing properties.

Cellulose fibers that are most suitable for the invention, preferably used in a synergic way together with the above-mentioned silicates and silico-aluminates, are cellulose and alpha-cellulose fibers of varied length, both pure or from paper and cardboard recycling processes.

Preferably, in order to aid and expedite the process of the invention, a catalyzer is used. The catalyzer consists of an extremely fine dispersion of specific crystal silicon compounds, oxides and porous micro-agents, to be added during the flocculation phase. By means of this catalyzer, a heterogeneous catalysis is obtained, so that reactions are quickened by the action of the solid's forces on reacting molecules. The first phase of this process, therefore, consists in the reagents being adsorbed on the solid itself.

The catalyzer used to quicken the process of the invention includes alumina silicae having the following formula: 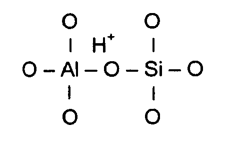 which is added between 1 part per billion and 5 parts per million of catalyzer per liter of the wastewater to be treated.

The synergic substances of the invention further include non-ionic and anionic flocculants, such as polyacrylamides (high molecular weight, high charge), polyamines, polyethylenimines, polyamidoamines. Compatibly with final use of recirculation water, other coagulants may be used, such as ferric chloride, aluminum sulfate, aluminum polychloride and calcium chloride. The above components are needed to electrically and sterically disrupt colloidal dispersions (colloids) of soil removed by means of detergents and included in washing water, as well as silico-aluminate and/or cellulose substances used for physical disruption (adsorption, replacement, charge re-distribution, etc.). According to the invention:
- **flocculants** are the compounds that make it possible for suspended particles to aggregate, in order to obtain larger flocs and therefore a faster liquid-solid separation. These compounds bind the suspended particles by means of bridge bonds. The majority of flocculants consists of high-molecular-weight polymers with functional clusters of opposing charge to that of suspensions to be treated. Therefore, an anionic flocculant will react with an electrically positive suspension, whereas a cationic flocculant will react with an electrically negative suspension. Non-ionic flocculants act sterically. Synthetic flocculants are also suitable for use with the invention, such as non-ionic and anionic polyacrylamides. Polyethylenimines, polyamines and polyamidoamines are also used. Polymeric flocculants are equally efficient in the invention. They include reacting groups that work well with surfaces of suspended colloids or of very small particles in water suspension. Depending on their ionic value, their interaction with solid particles is based on the formation of hydrogen bridges (non-ionic flocculant), or on interchange of charges (anionic and cationic types), leading to disrupting the surface of particles. By disrupting and coagulating several particles, large flakes are formed which are easily separated from the suspension. In this respect, active potentials on the particle surface are crucial. These potentials are determined both by particles themselves and by external conditions, i.e. by the water's ionic force and ensuing characteristics, such as pH, electric conductivity, water hardness and surfactant content. Polymeric flocculants can flocculate solid particles such as colloids, hydroxides and bacterial mass. Mineral flocculants are particularly effective in this invention, by promoting adsorption and charge neutralization;
- **Coagulants** interact with suspended substances, and either neutralize them or invert their surface charge (by reducing or inverting their Z potential). Salts such as ferric chloride, aluminum sulfate, etc. enhance the salinity of treated solutions, and may only be conveniently used when the said salinity increase does not impair the use of washing and rinsing solutions (which are not needed in the process described here). Such difficulty, however, can be easily overcome by using a Reverse Osmosis device.

The above synergic substances are used in the form of powder mixed in water (slurry). Preferably, a dispersion of perlite, smectite, diatomite, cellulose fibers, plus clinoptilolite and a polyacrylamide flocculant, preferably of the non-ionic type, is prepared according to the invention.

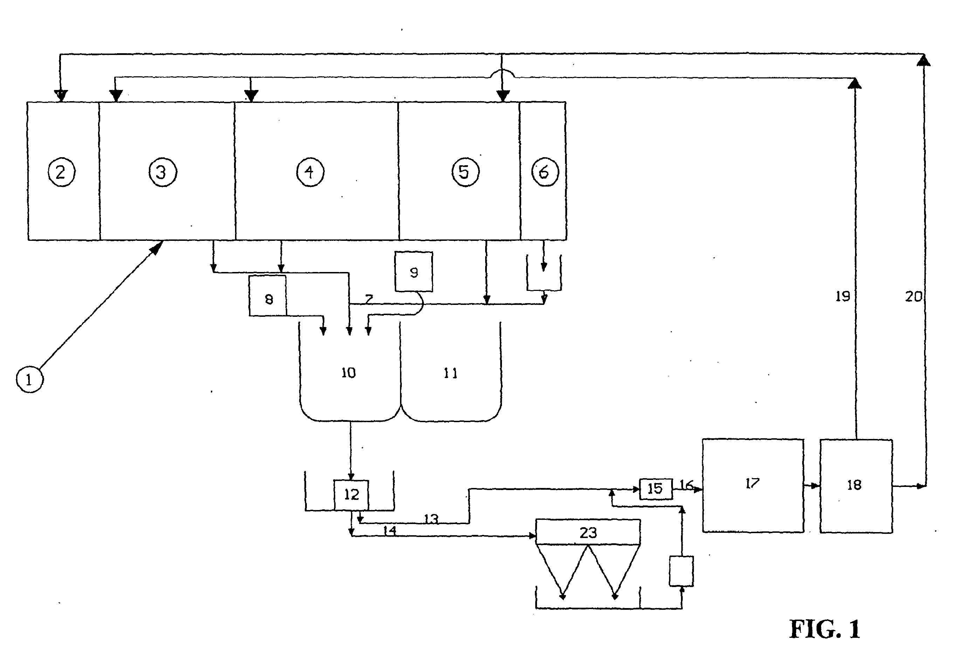

The apparatus of the invention shown in figure 1 is specifically designed for the treatment and recycling of wastewater 7 from pre-washing 3, washing 4, rinsing 5 and spin-drying 6 sections of a heavy-duty tunnel washer 1. First the wastewater 7 is added, at the feeding device 8, together with inerts made of silicates and silico-aluminates, possibly together with cellulose fibers and then, at the feeding device 9, the above flocculation substances are added, possibly together with coagulants. Silico-aluminates and other inerts are added as 10-500 g per m³ of wastewater. It is recommended to use suspensions at 4-5% of silico-aluminate inerts and cellulose fibers. In order to ensure the correct dosage of the added substances, the wastewater feeding 7 from the machine 1 is fitted with a suitable water meter.

The resulting solution is then routed to a flocculation reactor 10, preferably coupled with an identical reactor 11 which should be in stand-by mode and only run as a backup. In the above reactor 10 the suspension of water and additives is obtained, for the time needed (between a few seconds and one minute, depending on the water temperature, the detergent composition and the amount of soil to be treated) for the formation of flocs of soil and detergent bound together. Once flocculation is obtained, the treated water is channeled through a solid-liquid separation system, for example a filter 12, including sock, multi-sack, tape, as well as Dual Media.

The use of such filter yields a neutral slush, which will not release the trapped soil, and may therefore be dried up and disposed of, as well as a flow of filtered water 13 and a flow of backwash water 14, both still hot and containing the unused detergent from the previous cycle of treated water. Water flow 13 is further purified by means of a microfilter 15, preferably of Wessel type with filtering layer of 5-micron porosity. On the other hand, after being purified by means of a filter 23 of sand, sock or any other solid-liquid separation system, backwash water 14 is channeled back together with the above washing water 13. The flow 16 of purified water may be either fed directly back into the machine 1, or stored in a reservoir 17 and then fed through a filter 18 featuring reverse osmosis, ultrafiltration or nanofiltration. The filtered water flow 19 containing the unused detergent is then fed back into the pre-washing 3 and washing 4 units of machine 1, and another flow of detergent-free water 20 is channeled to soaking 2 and rinsing 5 units of the same machine 1.

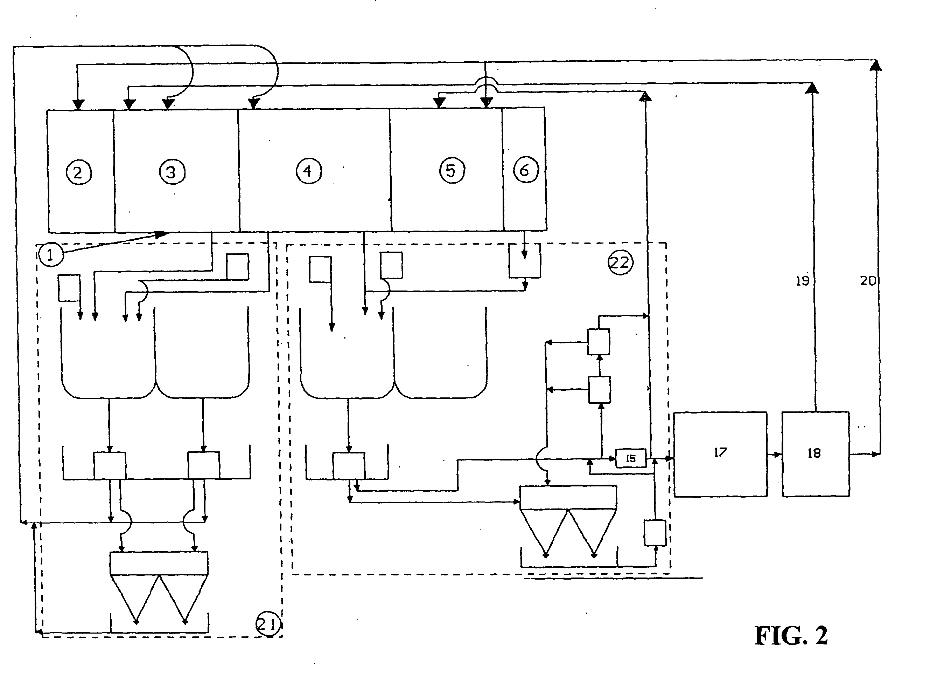

In the embodiment shown in figure 2, the apparatus of the invention includes split units 21 and 22, both corresponding to the one shown in figure 1, though each of them is specifically used for the treatment of wastewater from pre-washing 3 and washing 4 sections, and respectively rinsing 5 and spin-drying 6 sections of the same machine 1.

According to further embodiments of the invention, not illustrated, the apparatus of figures 1 and 2 are adapted for treating wastewaters in continuous or batch. The reservoir 17 particularly accumulates the purified water in the continuous processing of wastewaters and, at the same time, it is adapted for lowering the water temperature and/or chemically conditioning the process of the invention.

According to the process of the invention, when the washing machine is not functioning (for any length of time and for any reason), both washing and rinsing water (the former having been treated with the synergic process of the invention and the latter having undergone reverse osmosis, ultrafiltration, nanofiltration and/or ozonization processes) shall be stored in proper containers (not shown in the figures) before their next use. Moreover, in order to ensure long-lasting hygienic properties of the recycled water, and to prevent the formation of bacteria and/or algae, the said storage containers should be fitted with proper devices, such as UV lights, ozonization devices and/or dosing devices of hydrogen peroxide, hypochlorite or such plus, upon a specified number of cycles depending on the technical characteristics of washing machines and on other parameters relating to soil type, a cycle including reverse osmosis, ultrafiltration (also of the depression type) or nanofiltration, so as to ensure elimination of bacteria, algae, viruses, pyrogens and such. To this end the same reverse osmosis, ultrafiltration and nanofiltration units, already fitted on the system, may be used. However it must be noted that also washing temperatures, the synergic process and pH value, already cut the above inconveniences.

In order to evaluate its efficiency, the process of the invention has been used for treating wastewater from the washing and rinsing cycles of a household washing machine.

The apparatus used in this testing procedure included a reactor, wherein the synergic substances of the invention were blended in the washing water. The resulting suspension was then channeled to the filtering and recirculation units. The amount of treated water was 1 m³ for the washing cycle and 1 m³ for the rinsing cycle.

The testing phase aimed at verifying whether the recycle of the treated washing water would allow for substantial saving in terms of detergent and heat generation, and whether it would improve the quality of the washing process.
Results obtained with the first washing cycle, the second cycle and all the following cycles with the recycled water (each time using the water deriving from the previous cycle) were striking. The amount of removed soil turned out to be identical, or indeed higher than in the first cycle. Both visually and by means of specific testing tools, no difference was found. The pH value of the washing solution remained unchanged in all subsequent cycles. During this initial testing, washing temperatures ranged between 60°C and 75°C.
Subsequently, the following test has been carried out using a different approach and different tools.

Two equivalent quantities of wastewater from two different washing cycles of two different washing machines (tunnel washer and household washing machines), operating in two different environments and using different detergents, were tested.

In order to further prove the effectiveness of the reaction, one test was run with hot water (65°-75°C), the other with cold water, and both tests yielded the same results. As further proof, washing cycles and recirculation processes were defined so that they could be run simultaneously.

The above tests had the following objectives, as agreed before running the testing phase itself:
- evaluating the separation of soil from the washing solution in the case of whole wastewater treatment,
- evaluating, by means of a second washing cycle carried out with reclaimed water from the previous cycle, with the same machine load of heavily soiled garments, whether the separation system and the composition of concurring substances would still be efficient,
- carrying out several additional washing cycles, only by refilling the regular percentage of detergent used to remove the soil in the various washing cycles, in order to test the efficiency of the process in the case of repeated cycles.

To this end, the following devices have been installed:
- a washing machine, suitably adapted in order to sample and test wastewater, with a known cycle so as to monitor the washing tests,
- reliable, though not highly technological, measurement tools such as graduated containers, thermometers, stopwatch, separation filters and a scale,
- various loads of soiled garments, including linens, towels, bibs, underwear, tablecloths etc., as well as various garments washable at high temperatures.

The test washing cycle was carried out at high temperature - 75°C - with no prewash, four cold rinses, a mid-stage spin-dry cycle and a final spin-dry cycle. For the second washing cycle, the reclaimed water from the first wash was used, after treating it with the process of the invention. The second washing wastewater was treated again to separate the soil, and the successful reaction was verified. Subsequent cycles were carried out in the same way, with simple refills of the quantities of detergent actually used in previous washing cycles.

It has also been shown that the system works fine with different concentration values of the synergic reactives. Such reactives, if increased, have also shown the possibility of separating soil as well as detergent from spin-dry and rinsing wastewater.

The results of this latter testing were comparable, if not better, than those obtained with the previous testing; further positive tests were carried out using blood stains, chocolate, red wine, carbon black and various tomato products. Testing carried out on wastewater from rinsing, treatment and spin-dry cycles of linen treated with the synergic substances of the invention and with the corresponding devices (reverse osmosis, ultrafiltration, nanofiltration, ozonization, active carbon filtering), but mostly by applying reverse osmosis, have shown that rinsing wastewater did not contain any trace of detergent, salinity or hardness.

Therefore, in order to eliminate soil (which is in the form of colloidal solution, micellae, etc.) from rinsing water, to keep the surfactant content that was unused in previous cycles and use it in subsequent cycles, the invention uses silico-aluminates, cellulose, common clay available as thin dusts and used as liquid suspension (slurry), which disrupt soil colloidal solutions by achieving chemical and physical adsorption, ionic replacement, coagulation and uneven distribution of electric charges.

Polymeric flocculants disrupt the colloidal bonds of soil, while promoting co-flocculation of silico-aluminates, etc. added to the same solution, also thanks to their sterical effect. A catalyzer is used to quicken the process, and therefore to improve efficiency and action.

The synergic substances, the process and the apparatus illustrated here may also be used to recover the rinsing wastewater, as described in the following claims.

It must also be noted that neither substances nor the catalyzer, as used in the process of the invention, chemically modify treated waters. Used substances are not soluble, therefore they are eliminated with the slurry upon filtration. Moreover, they have no impact on pH, they are chemically inert and not harmful to health, given that all silico-aluminate and cellulose compounds are used as a slurry suspension.

There is no danger of polluting agents being released in the environment, as they are irreversibly incorporated in muds, which may in turn be used in a variety of applications.

## Claims

1. Substances with synergic effect for the treatment of wastewater, particularly wastewater from washing machines, **characterized in that** said substances include inerts and flocculants.

2. Substances according to claim 1, wherein the said inerts contain silicates, silico-aluminates and cellulose fibers, either alone or blended.

3. Substances according to claim 2, wherein the said silicates and silico-aluminates include:
- perlite and expanded perlite,
- diatomite,
- activated kaolin,
- kaolinite,
- vermiculite (or chlorite),
- all sorts of talc,
- clinoptilolite,
- clays,
- Portland cement,
- smectites.

4. Substances according to claim 2, wherein the said cellulose fibers include cellulose and alpha-cellulose fibers of any length.

5. Substances according to claim 1, wherein a catalyzer is further included consisting of a dispersion of silicon compounds and of porous micro-agents.

6. Substances according to claim 5, wherein the said catalyzer includes alumina silicae having the following formula:

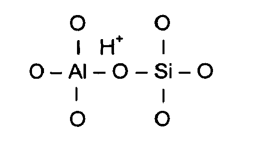

7. Substances according to claim 5, wherein the said catalyzer is present as between 1 part per billion and 5 parts per million of the catalyzer per liter of said wastewater.

8. Substances according to claim 1, wherein said flocculants are non-ionic and anionic flocculants.

9. Substances according to claim 8, wherein said flocculants include polyacrylamides, polyamines, polyethylenimines, polyamidoamines.

10. Substances according to claim 1, wherein coagulating agents are also included.

11. Substances according to claim 10, wherein said coagulants include ferric chloride, aluminum sulfate, aluminum polychloride and calcium chloride.

12. Substances according to one or more of the previous claims, wherein they include perlite, smectite, diatomite and cellulose fibers, with the addition of clinoptilolite, a polyacrylamide flocculant and the said catalyzer.

13. Process for the treatment of wastewater, particularly wastewater from washing machines, **characterized in that** a suspension is obtained, within said wastewater, of the substances according to one or more of the previous claims, in order to disrupt colloidal solutions of soil and to promote flocculation of the said inerts, once the latter have bound to soil particles.

14. Process according to claim 13, wherein the said silico-aluminate and cellulose inerts are stirred into the water to be treated until soil particles are fully incorporated, and wherein said flocculants and catalyzer are then similarly stirred in, until flocs are obtained.

15. Process according to claim 14, wherein the soil is separated from the treated wastewater, the unused detergent coming from the previous washing cycle being kept in the same wastewater.

16. Process according to claim 13, wherein the said wastewater treatment lasts between a few seconds and some minutes, depending on the water temperature, the detergent composition and the amount of soil to be treated, that is until flocs of soil and detergent bound together are formed.

17. Process according to claim 13, wherein the said wastewater comes from a heavy-duty tunnel washer, and wherein the said process includes selective treatment of wastewater coming from the pre-washing and washing sections and, respectively, of the wastewater discharged from rinsing and spin-drying sections of the same washing machine.

18. Process according to claim 17, wherein 10-500 g are added of the said silico-aluminate inerts per m³ of water to be treated.

19. Process according to one of claims 13 to 18, wherein it is a continuous or batch process for the treatment of said wastewaters.

20. Washing apparatus with recycle of wastewater, particularly wastewater from washing machines (1), wherein the substances having synergic effect and the process described in one or more of the previous claims are used.

21. Apparatus according to claim 20, wherein means are provided to separate the soil from the said wastewater, thus allowing the recycle of said wastewater, along with their incidental residual content of the non-reacted detergent of the previous cycle.

22. Apparatus according to claim 21, wherein said means realize a suspension of the said synergic substances in the said wastewater, as well as flocs of the said inerts, once the latter have bound to soil particles.

23. Apparatus according to claim 22, wherein a feeding device (8) for adding the said inerts to wastewater, and a feeding device (9) for adding the said flocculation agents to the same wastewater are included.

24. Apparatus according to claim 23, wherein a flocculation reactor (10) for obtaining the said suspension of water and substances, and a solid-liquid separation system (12) for separating the muds from the clean water containing the unused detergent are included.

25. Apparatus according to claim 24, wherein a microfilter (15) is further included for purifying filtered water (13) and backwash water (14) from the said system (12).

26. Apparatus according to claim 25, wherein an additional filter (18) for reverse osmosis, ultrafiltration or nanofiltration is provided, yielding a filtered water flow (19) containing the residual or unused detergent, which is fed back into the pre-washing (3) and washing (4) units of the said washing machine (1), as well as a detergent-free filtered water flow (20), channeled to soaking (2) and rinsing (5) units of the same washing machine (1).

27. Apparatus according to claim 20, wherein split units (21, 22) are provided for the treatment and recycling of the wastewater drawn from the said pre-washing (3) and washing (4) units and, respectively, from the rinsing (5) and spin-drying (6) sections of the same washing machine (1).

28. Apparatus according to one or more of the above claims, wherein said apparatus is a heavy-duty washing machine or a household washing machine.

29. Use of the substances with synergic effect and of the process according to one or more of the previous claims, for the recovery and the recycle treatment of the wastewater discharged from heavy-duty washing machines and household washing machines.
